# EUROPEAN PATENT APPLICATION

(11) **EP 4 471 903 A1**
(43) Date of publication of application: **04.12.2024**
(21) Application number: 23762815.1
(22) Date of filing: 24.02.2023
(51) Int. Cl.: H01M 4/505

(54) **NEGATIVE ELECTRODE ACTIVE MATERIAL, PREPARATION METHOD THEREFOR AND APPLICATION THEREOF**

(30) Priority: 02.03.2022 CN 202210197761
(71) Applicant: Berzelius (Nanjing) Co., Ltd., Jiangsu 210006 (CN); Berzelius (Hefei) Co., Ltd., Hefei, Anhui 231582 (CN)
(72) Inventor: LUO, Shu, Nanjing, Jiangsu 210006 (CN); WANG, Cen, Nanjing, Jiangsu 210006 (CN); LI, Zhe, Nanjing, Jiangsu 210006 (CN); ZHA, Daosong, Nanjing, Jiangsu 210006 (CN); ZHANG, Hebao, Nanjing, Jiangsu 210006 (CN); YE, Lan, Nanjing, Jiangsu 210006 (CN); ZHAO, Shuangyu, Nanjing, Jiangsu 210006 (CN)
(74) Representative: Kurig, Thomas
(86) International application number: PCT/CN2023/078030
(87) International publication number: WO 2023/165415

(57) **Abstract**

The present application provides an anode active material and a preparation method and application thereof. The anode active material comprises anode active substance particles, and the anode active substance particles comprise a silicon-based material core and a carbon film layer covering a surface of the silicon-based material core; the silicon-based material core contains a silicon oxide compound; and a ratio of a median particle size D₅₀ to a calculated particle size D_{c} of the anode active material satisfies: D₅₀/D_{c}≤15, where the calculated particle size D_{c}=7×A/S, A represents a particle size distribution span value of the anode active material, and S represents a specific surface area of the anode active material. The anode active material provided by the present application has fewer defects in the carbon film layer and higher interface stability in an electrochemical system, and exhibits superior cycle stability, high-temperature performance, and lower expansion and gas production.

## Description

### Technical Field

The application relates to the field of batteries, in particular to an anode active material for a secondary battery, a preparation method thereof, an electrode and a battery.

### Background

At present, three types of silicon anode active materials are mainly studied and developed: monatomic silicon (including nano-silicon, porous silicon, amorphous silicon, and the like) and its composites with carbon materials; alloy materials formed by compounding silicon with other metals (such as ferrum, manganese, nickel, chromium, cadmium, tin, and copper) and non-metals (such as carbon, nitrogen, phosphorus, and boron); and composite material of silicon oxide and carbon material thereof silicon oxide compound. However, due to various reasons related to monatomic silicon itself, the first and second types of materials result in electrode materials with poor cycle performance, and they are prone to pulverization and separation from a current collector.

The silicon oxide compounds contain many inactive substances, thus having a capacity lower than that of the monatomic silicon anode active material. However, due to the existence of these inactive substances, the expansion of silicon in the cycle process is effectively restrained by the inactive phase, so the silicon oxide compounds have an outstanding advantage in cycle stability.

The silicon oxide compounds also have some specific problems. When lithium is initially intercalated into the material, too many side reactions occur between the surface of the particles and the electrolyte, and a thick SEI film is generated; moreover, substances that are irreversible to release lithium ions, such as lithium metasilicate and lithium oxide, are generated in the particles, thus resulting in irreversible losses of lithium ions in batteries. These two irreversible reactions reduce the initial coulombic efficiency of lithium ion batteries containing silicon oxide compound anodes, thus limiting the improvement of the energy density of the batteries. In addition, the silicon oxide compounds also have the problems of low ionic and electronic conductivity, low coulombic efficiency during the cycle process, and the like.

Further, a large amount of research has revealed that the surface of silicon oxide compound particles significantly influences the stability of their electrochemical properties, including the stability of the interface reaction between the silicon oxide particle surface and the electrolyte, and the sensitivity of the silicon oxide particle surface to transition metal precipitation. The aforementioned interface stability has a significant impact on the cycle life of silicon-containing battery systems, charge/discharge ability and storage stability at high temperatures, and cell expansion problems. Due to the existence of interface side reactions, the cell may experience significant gas generation after multiple charge and discharge cycles or exposure to high-temperature environments, leading to safety risks. Therefore, the preparation of silicon oxide compound particles with stable surface characteristics is one urgent issue to address.

The content in the background art is only the technology known to the applicants, and does not represent the prior art in this field.

### Summary

To solve at least one of the above technical problems, the invention provides an anode active material, comprising anode active substance particles, wherein the anode active substance particles comprise a silicon-based material core and a carbon film layer covering a surface of the silicon-based material core; the silicon-based material core contains a silicon oxide compound; an

a ratio of a median particle size D₅₀ to a calculated particle size D_{c} of the anode active material satisfies: D₅₀/D_{c}≤15, where the calculated particle size D_{c}=7×A/S, A represents a particle size distribution span value of the anode active material, and S represents a specific surface area of the anode active material.

In some embodiments of the invention, the ratio of the median particle size D₅₀ to the calculated particle size D_{c} of the anode active material satisfies: D₅₀/D_{c}≤10, preferably D₅₀/D_{c}≤5, and further preferably D₅₀/D_{c}≤2.5.

In some embodiments of the invention, the specific surface area S of the anode active material is 0.1-15 m²/g, preferably 0.3-10 m²/g, and further preferably 0.3-6 m²/g.

In some embodiments of the invention, the median particle size D₅₀ of the anode active material is 0.2-20 µm, preferably 1-15 µm, and further preferably 3-13 µm; and
the particle size distribution span value A of the anode active material is less than or equal to 2.0, preferably less than or equal to 1.5, and further preferably less than or equal to 1.2.

In some embodiments of the invention, the silicon-based material core further contains lithium.

In some embodiments of the invention, the content of lithium in the anode active substance particles is 0.1-20wt%, preferably 2-18wt%, and more preferably 4-15wt%.

In some embodiments of the invention, the content of silicon in the anode active substance particles is 30-80wt%, preferably 35-65wt%, and more preferably 40-65wt%.

In some embodiments of the invention, the anode active substance particles further comprise nano-silicon grains, and a median particle size of the nano-silicon grains dispersed in the silicon-based material core is 0.1-35 nm, preferably 0.5-20 nm, and further preferably 1-15 nm.

In some embodiments of the invention, a thickness of the carbon film layer is 0.001-5 µm, preferably 0.005-2 µm, and more preferably 0.01-1 µm.

In some embodiments of the invention, the mass of the carbon film layer accounts for 0.01-20wt%, preferably 0.1-15wt%, and more preferably 1-12wt% of the total mass of the anode active substance particles.

The invention further provides an electrode, comprising the anode active material as described above.

The invention further provides a battery, comprising the electrode as described above.

The invention further provides a method of preparing the anode active material, comprising:
preparing silicon oxide compound particles; and
coating surfaces of the silicon oxide compound particles with a carbon film layer.

In some embodiments of the invention, the method further comprises:
performing lithium doping on the silicon oxide compound particles coated with the carbon film layer.

The anode active material provided by the invention has fewer defects in the carbon film layer and higher interface stability in an electrochemical system, and exhibits superior cycling stability, high-temperature performance, and lower expansion and gas production.

Additional aspects and advantages of the present invention will be given in part in the following description, and will become apparent in part from the following description or be learned by practice of the present invention.

### Brief Description of the Drawings

Fig. 1 is a flowchart of a preparation process provided by an embodiment of the invention.
Fig. 2 is a flowchart of a preparation process provided by another embodiment of the invention.

### Detailed Description of Embodiments

For the sake of a better understanding of the solutions and advantages of the present application, specific implementations of the present application will be explained in further detail below in conjunction with embodiments. However, the specific implementations and embodiments described below are merely for the purpose of description and are not used to limit the present application.

It is particularly important to point out that all similar substitutions and modifications are obvious to those skilled in the art, and they are all considered to be included in the invention. The method and application of the invention have been described through preferred embodiments, and relevant personnel can obviously modify or appropriately change and combine the method and application described herein without departing from the content, spirit and scope of the invention, so as to realize and apply the technology of the invention.

### [Anode active material]

The present application provides an anode active material for batteries, comprising anode active substance particles, wherein the anode active substance particles comprise a silicon-based material core and a carbon film layer covering a surface of the silicon-based material core. The silicon-based material core contains a silicon oxide compound; and the silicon-based material core may be silicon oxide compound particles or lithium-doped silicon oxide compound particles, that is, the silicon-based material core may also contain lithium.

A ratio of a median particle size D₅₀ to a calculated particle size D_{c} of the anode active material provided by the present application satisfies: D₅₀/D_{c}≤15, where the calculated particle size D_{c}=7×A/S, A represents a particle size distribution span value of the anode active material, and S represents a specific surface area of the anode active material. A=(D₉₀-D₁₀)/D₅₀, where the particle size D₁₀ is a particle size at which the cumulative distribution of particles is 10%, that is, the volume content of particles smaller than this particle size accounts for 10% of all particles; the median particle size D₅₀ is a particle size at which the cumulative distribution of particles is 50%, that is, 50% of the particles exceed this value and 50% of the particles are below this value; and the particle size D₉₀ is a particle size at which the cumulative distribution of particles is 90%, that is, the volume content of particles smaller than this particle size accounts for 90% of all particles.

The inventors of the present application found in their research that the surface characteristics of the anode active substance particles for batteries, especially their interface stability in an electrochemical system, have a significant correlation with the structure of the carbon film layer on their surfaces.

Common structural defects of the carbon film layer include pores, impurities, disorder in carbon layer crystal structure, a high content of carbon-hydrogen/carbon-oxygen/carbon-sulfur bonds, high surface roughness, cracks, and so on. These structural defects may lead to an increased specific surface area of the anode active material, increased side reactions with an electrolyte, stronger interactions with transition metals leaching from a positive electrode, deteriorating the cycle stability, high-temperature stability, expansion rate, and other electrochemical properties of the anode active material. Additionally, the presence of interface side reactions may result in severe gas swelling in a cell after cycling or exposure to high temperatures, posing safety risks.

The ratio of the median particle size D₅₀ to the calculated particle size D_{c} of the anode active material provided by the present application satisfies: D₅₀/D_{c}≤15. In this case, the anode active material has fewer defects in the carbon film layer and thus higher interface stability in an electrochemical system, and exhibits superior cycle stability, high-temperature performance, and lower expansion and gas production.

In some embodiments of the present application, D₅₀/D_{c}≤10, preferably D₅₀/D_{c}≤5, and further preferably D₅₀/D_{c}≤2.5. The smaller the value, the fewer defects there are in the carbon film layer on the surface of the anode active material.

In some embodiments of the present application, the specific surface area S of the anode active material is 0.1-15 m²/g, preferably 0.3-10 m²/g, and further preferably 0.3-6 m²/g.

In some embodiments of the present application, the median particle size D₅₀ of the anode active material is 0.2-20 µm, preferably 1-15 µm, and further preferably 3-13 µm.

In some embodiments of the present application, the particle size distribution span value A of the anode active material is less than or equal to 2.0, preferably less than or equal to 1.5, and further preferably less than or equal to 1.2.

In some embodiments of the present application, the content of silicon in the anode active substance particles may be 30-80wt%, preferably 35-65wt%, and more preferably 40-65wt%, thus making the material have a high reversible capacity.

In some embodiments of the present application, the content of lithium in the silicon-based material core is 0.1-20wt%, preferably 2-18wt%, and more preferably 4-15wt%.

In some embodiments of the present application, the anode active substance particles also contain nano-silicon grains which can be uniformly dispersed in the silicon-based material core. The nano-silicon grains can exist in the form of nano-particles in the silicon-based material core, with a median particle size of 0.1-35 nm, preferably 0.5-20 nm, and more preferably 1-15 nm. Particles within this size range exhibit minimal expansion and are resistant to fracturing during the cyclic process of lithium ion intercalation and deintercalation. As a result, lithium-ion secondary batteries employing this material demonstrate low cycle expansion and enhanced cycle stability.

In some embodiments of the present application, a thickness of the carbon film layer may be 0.001-5 µm, preferably 0.005-2 µm, and more preferably 0.01-1 µm, The carbon film layer can effectively improve the conductivity of the particles, and reduce the contact resistance between particles in a negative electrode plate and between the negative electrode plate and a current collector, thus improving the delithiation efficiency of materials, reducing the polarization of lithium-ion batteries and promoting their cycle stability.

In some embodiments of the present application, the mass of the carbon film layer may account for 0.01-20wt%, preferably 0.1-15wt%, and more preferably 1-12wt% of the total mass of the anode active substance particles.

The anode active material for batteries provide by the present application has relatively stable surface characteristics, leading to higher interface stability with the electrolyte and fewer interactions with transition metals precipitated from the positive electrode. Batteries produced using such anode active material offer advantages such as high cycle stability, outstanding high-temperature performance, low expansion, and reduced gas production.

### [Preparation method of anode active material]

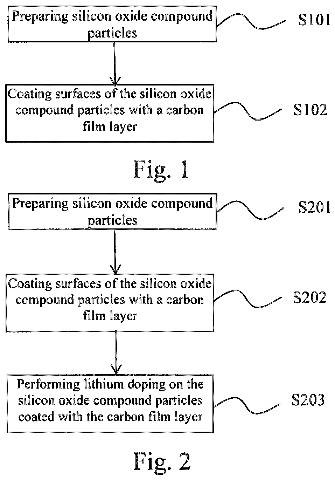

Fig. 1 is a flowchart of a preparation process of an anode active material according to an exemplary embodiment of the present application.

In S101, silicon oxide compound particles are prepared.

The specific process of preparation may be carried out according to the following steps.

First, a mixture of metal silicon powder and silicon dioxide powder is heated in the temperature range of 900-1600°C in an inert gas atmosphere or under reduced pressure, generating silicon oxide gas. The molar ratio of metal silicon powder to silicon dioxide powder is set within the range of 0.5-1.5. Gas produced by the heating reaction of the raw materials deposits on an adsorption plate. A deposited material is then removed when the temperature inside a reacting furnace drops below 100°C, and crushed and pulverized using equipment such as a ball mill and a jet mill, resulting in silicon oxide compound particles.

The silicon oxide compound particles referred to in the present application include silicon oxide (silicon monoxide and/or silicon dioxide) materials. In an exemplary embodiment of the present application, the silicon-to-oxygen stoichiometric ratio in the silicon oxide compound particles can be 1:0.4-1:2, optionally 1:0.6-1:1.5, and more optionally 1:0.8-1:1.2. Additionally, there may be other trace impurity elements besides silicon and oxygen.

In S102, surfaces of the silicon oxide compound particles are coated with a carbon film layer.

The structure of the carbon film layer on the surfaces of the particles is greatly influenced by the preparation process, with significant structural differences observed in the carbon film layers obtained under different process parameters (such as carbon source type, coating temperature, atmosphere, air pressure, heating rate, carbon content, magnetic field, electric field, and the like) and different furnace structure designs. The degree of defects in the carbon film layers also varies significantly.

According to the exemplary embodiment, the silicon oxide compound may be a non-disproportionated silicon oxide compound or a silicon oxide compound subjected to disproportionation heat treatment. Here, the disproportionation heat treatment temperature may be 600-1100°C, optionally 700-1000°C, and more preferably 800-1000°C.

In this present application, the carbon film layer may be directly obtained by chemical vapor deposition (CVD). A carbon source used in CVD is hydrocarbon gas, and the decomposition temperature of the hydrocarbon gas may be 600-1100°C, preferably 700-1000°C, and more preferably 800-1000°C. In the above-mentioned carbon film coating process, the choice of carbon source, carbonization temperature, the amount of carbon source added, the proportion of gas and the flow rate all have significant effects on the final carbon film structure. In addition, controlling the air pressure (vacuum degree) and the proportion of atmosphere and devising a unique airflow direction in the process of carbon film growth also have distinct impacts on the carbon film structure. Preferably, introducing a mixture of carbon source gas and inert gas or reducing gas (such as argon, nitrogen, helium, and hydrogen) in a certain proportion yields a carbon film of higher quality compared to using pure carbon source gas alone. Moreover, ensuring that the volume ratio of carbon source gas in the mixed gas does not exceed 90%, preferably not surpassing 75%, and more preferably not going beyond 65% facilitates the formation of a carbon film layer with improved coating quality and uniformity. Additionally, reducing the furnace pressure during the carbon film growth process to maintain a certain level of negative pressure (vacuum degree) greatly enhances the uniformity of the carbon film layer, resulting in a higher degree of smoothness and compactness.

The carbon film layer can also be obtained by first performing carbon reaction coating and then performing heat treatment carbonization in a non-oxidizing atmosphere. The carbon reaction coating can be realized by any one of a mechanical fusion machine, a VC mixer, a coating kettle, a spray dryer, a sand mill or a high-speed dispersion machine. A solvent adopted for coating is one or more of water, methanol, ethanol, isopropanol, N-butanol, ethylene glycol, ether, acetone, N-methylpyrrolidone, methyl butanone, tetrahydrofuran, benzene, toluene, xylene, N,N-dimethylformamide, N,N-dimethylacetamide and chloroform. A carbon reaction source may be one or more of coal tar pitch, petroleum pitch, polyvinyl alcohol, epoxy resin, polyacrylonitrile, polymethyl methacrylate, glucose, sucrose, polyacrylic acid and polyvinylpyrrolidone. Equipment used for heat treatment carbonization may be any one of a rotary furnace, a ladle furnace, a roller kiln, a pushed slab kiln, an atmosphere box furnace or a tube furnace. The temperature for heat treatment carbonization may be 600-1100°C, preferably 700-1000°C, and more preferably 800-1000°C. The heat preservation time may be 0.5-24 hours. The non-oxidizing atmosphere may be provided by at least one of nitrogen, argon, hydrogen or helium. In the above-mentioned carbon film coating process, the selection of carbon source, carbonization temperature, the amount of carbon source added, the heating speed, the design of heating and heat preservation program, the intensity of mechanical stirring and the selection of coating equipment all have significant effects on the final carbon film structure. Preferably, designing a heating program featuring multi-temperature stage preservation facilitates the formation of a carbon film coating structure of higher quality. Selecting appropriate intermediate heat preservation programs enables thorough melting of the carbon source compounds, ensuring proper fluidity and initiating preliminary coke discharge reactions, leading to a more uniform and compact carbon film coating layer. Moreover, in the heat treatment carbonization process, dynamic carbonization is preferred, involving dynamic stirring of the material during heating and preservation process to facilitate the efficient release of volatiles produced during carbonization of the carbon source, ultimately resulting in a more compact, less defective carbon film layer.

Fig. 2 is a flowchart of a preparation process of an anode active material according to another exemplary embodiment of the present application. The preparation process comprises the following steps.

In S201, silicon oxide compound particles are prepared.

In S202, surfaces of the silicon oxide compound particles are coated with a carbon film layer.

In S203, lithium doping is performed on the silicon oxide compound particles coated with the carbon film layer.

In this present application, the doping (lithium intercalation) of the silicon oxide compound particles may be achieved through electrochemical doping, liquid-phase doping and thermal doping. The doping atmosphere of lithium element is a non-oxidizing atmosphere, which is composed of at least one of nitrogen, argon, hydrogen or helium.

The following lithium intercalation methods (lithium doping modification methods) may be adopted.

### (1) Electrochemical method

An electrochemical cell is provided, which comprises a bath, an anode electrode, a cathode electrode and a power supply, wherein the anode electrode and the cathode electrode are respectively connected with two ends of the power supply; the anode electrode is connected to a lithium source, and the cathode electrode is connected to a container containing the silicon oxide compound particles; and the bath is filled with an organic solvent, so that the lithium source (anode electrode) and the container (cathode electrode) containing the silicon oxide compound particles are immersed in the organic solvent. After the power supply is turned on, due to the electrochemical reaction, lithium ions are intercalated into the silicon oxide compound structure, resulting in lithium-doped modified silicon oxide compound particles. The organic solvent may be ethylene carbonate, propylene carbonate, butylene carbonate, fluoroethylene carbonate, dimethyl carbonate, methyl ethyl carbonate, diethyl carbonate, ethyl acetate, n-propyl acetate, ethyl propionate, propyl propionate, dimethyl sulfoxide and other solvents. In addition, the organic solvent also contains electrolyte lithium salt, which may be LiPF₆, LiBF₄ and LiClO₄. The lithium source (anode electrode) may be lithium foil or lithium compounds, such as lithium carbonate, lithium oxide, lithium hydroxide, lithium cobaltate, lithium iron phosphate, lithium manganate, lithium vanadium phosphate, lithium nickelate, etc.

### (2) Liquid-phase doping method

Lithium metal, an electron transfer catalyst and the silicon oxide compound particles are added to an ether-based solvent, and continuously stirred and heated in a non-oxidizing atmosphere to maintain a constant-temperature reaction until lithium metal in the solution completely disappears. Under the action of the electron transfer catalyst, lithium metal can be dissolved in the ether-based solvent and form coordination compounds of lithium ions, which have low reduction potential, so they can react with silicon oxide compounds, and lithium ions enter the silicon oxide compound structure. The electron transfer catalyst may be biphenyl, naphthalene, etc. The ether-based solvent may be methyl butyl ether, ethylene glycol butyl ether, tetrahydrofuran, ethylene glycol dimethyl ether and the like. The temperature for constant-temperature reaction is 25-200°C. The non-oxidizing atmosphere is provided by at least one of nitrogen, argon, hydrogen or helium.

### (3) Thermal doping method

The silicon oxide compound particles are uniformly mixed with a lithium-containing compound, and then heat treatment is performed in a non-oxidizing atmosphere. The lithium-containing compound may be lithium hydroxide, lithium carbonate, lithium oxide, lithium peroxide, lithium hydride, lithium nitrate, lithium acetate, lithium oxalate and the like. Mixing is realized by any one of a high-speed disperser, a high-speed stirring mill, a ball mill, a conical mixer, a spiral mixer, a stirring mixer or a VC mixer. Equipment used for heat treatment is any one of a rotary furnace, a ladle furnace, a liner furnace, a roller kiln, a pushed slab kiln, an atmosphere box furnace or a tube furnace. The temperature for heat treatment is 400-850°C, preferably 550-800°C. The heat preservation time is 1-12 hours. The heating rate is greater than 0. 1°C per minute and less than or equal to 10°C per minute. The non-oxidizing atmosphere is provided by at least one of nitrogen, argon, hydrogen or helium.

By performing lithium intercalation after carbon film layer coating, the growth of silicon grains in the silicon oxide compound during heat treatment can be inhibited. Therefore, nano-scale monatomic silicon particles are uniformly dispersed and fixed in a lithium silicate compound or silicon oxide compound matrix, which can effectively inhibit the expansion of nano-silicon grains and prevent the silicon nano-particles from gradually merging into larger particles during charging and discharging. This reduces the expansion deformation of batteries in the cycling process and mitigates the electrical failure of the silicon material, leading to minimal cycle expansion and improved cycle stability in lithium-ion secondary batteries using the material. In addition, conducting carbon film layer coating before lithium intercalation enables the production of a better-quality and more complete carbon film layer.

Meanwhile, the process of lithium intercalation will have different levels of influence on the carbon film layer structure on the surfaces of the silicon oxide compound particles. If the diffusion process is mild and controllable, the impact on the carbon film layer structure on the surfaces of the particles is minimal; whereas if the diffusion process is relatively intense, it can trigger changes in the carbon film layer structure.

### [Characterization method of anode active material]

1. Material detection: Anode active materials prepared in each embodiment and each comparative example were characterized by the following equipment. The particle size distribution of the anode active materials was tested by BetterSize 2000 laser particle size analyzer produced by Dandong Bettersize Instruments. The surface morphology of the anode active materials was observed by Hitachi SU8010 scanning electron microscope (SEM). The specific surface area of the anode active materials was tested by NOVA 4200e specific surface area tester produced by Quantachrome Instruments. The requirements for testing the specific surface area were as follows: samples were weighed with a sample tube, nitrogen gas was used, and the specific surface area of the sample was tested by a multi-point method within the relative pressure range of p/p0=0.05-0.3.
2. Homogenization and electrode plate manufacturing: 30 parts of the anode active material, 64 parts of artificial graphite, 2.5 parts of conductive additive and 3.5 parts of binder were subjected to homogenization coating in an aqueous system, and then dried and rolled to obtain a negative electrode plate containing the anode active material of the application.
3. Evaluation of full cell: The negative electrode plates of the anode active materials prepared in each embodiment and each comparative example were cut, baked in vacuum, wound together with the paired ternary positive electrode plates and separators, and put into an aluminum-plastic case of a corresponding size. A specific amount of electrolyte was injected and the cells were sealed after degassing, resulting in the formation of lithium-ion full cells with a capacity of roughly 3.2 Ah. The full cell underwent a 60-day experiment of full charge storage at 60°C. The thermal expansion rate, capacity retention rate, and capacity recovery rate of the system after high-temperature full charge storage were tested to evaluate the high-temperature storage stability of the system. The testing method for the thermal expansion rate was as follows: after being stored at full charge at 60°C for 60 days, the cell was removed and immediately tested for its thickness d, the initial half-charged thickness of the cell was d0, and the thermal expansion rate was calculated as (d-d0)/d0; subsequently, after cooling, the cell was placed on a Neware battery testing system for discharge testing, with discharge capacity D1, the discharge capacity of the cell before high-temperature storage was D0, and the capacity retention rate was calculated as D1/D0; lastly, the cell underwent one charge-discharge cycle, with discharge capacity D2, and the capacity recovery rate was calculated as D2/D0.

The application will be further explained with specific embodiments.

### Embodiment 1-1

1000 g of silicon oxide compound particles with a median particle size of 6 µm (with a silicon-to-oxygen atomic ratio of 1:1) and low-temperature coal tar pitch powder were evenly dry-mixed in a coating vessel; then 2000 g of dimethylformamide was gradually added while stirring to uniformly disperse the mixed powder in the dimethylformamide; then the coating vessel was heated to 340°C and maintained at a constant temperature while stirring for 3 hours to obtain a coal tar pitch-coated silicon oxide compound material; this material was subjected to static heating in a nitrogen atmosphere to 680°C for 4 hours to carbonize the coal tar pitch; a resulting material obtained after cooling was sieved through a 500-mesh sieve to produce carbon-coated silicon oxide compound powder; and the carbon content of the carbon-coated silicon oxide compound powder was tested to be 7wt%.

The specific surface area S of the anode active material obtained in the above steps was 15m²/g, the median particle size D₅₀ of the product was 10.64 µm, the particle size distribution span value A was 1.52, and the calculated particle size D_{c} estimated according to the specific surface area was 0.71 µm, so the ratio of the median particle size D₅₀ to the calculated particle size D_{c} was 15.

30 parts of the anode active material, 64 parts of artificial graphite, 3.5 parts of conductive additive and 2.5 parts of binder were subjected to homogenization coating in an aqueous system, and then dried and rolled to obtain a negative electrode plate containing silicon.

In this embodiment, the evaluation results of high-temperature storage for the full cell containing the anode active material were as follows: after 60 days of high-temperature storage at full charge at 60°C, the thermal expansion rate of the cell was 22.7%, and the cell had gas bubbles. After high-temperature storage, the capacity retention rate was 78.6% and the capacity recovery rate was 86.3%.

### Embodiment 1-2

The process was similar to that of Embodiment 1-1, except that the carbonization temperature of coal tar pitch was adjusted to 780°C, while the carbon content remained at 7wt%.

See Table 1 for performance parameters.

### Embodiment 1-3

1000 g of silicon oxide compound particles with a median particle size of 9 µm and intermediate-temperature coal tar pitch powder were evenly dry-mixed in a VC reaction vessel, and then directly heated to 720°C and maintained at a constant temperature while stirring for 4 hours to realize in-situ carbonization of coal tar pitch; a resulting material obtained after cooling was sieved through a 500-mesh sieve to produce carbon-coated silicon oxide compound powder; and the carbon content of the carbon-coated silicon oxide compound powder was tested to be 7wt%.

The performance parameters and the high-temperature storage performance of a cell using the anode active material are shown in Table 1.

### Embodiment 1-4

1000 g of silicon oxide compound particles with a median particle size of 8 µm and high-temperature coal tar pitch powder were evenly dry-mixed in a VC reaction vessel, then heated to 450°C and maintained at a constant temperature while stirring for 3 hours so that coal tar pitch had sufficient fluidity to realize uniform coating, and then heated to 780°C for 5 hours for carbonization, with sufficient stirring during carbonization, so as to effectively discharge volatiles during pitch carbonization and obtain a carbon film layer with a more compact structure; a resulting material obtained after cooling was sieved through a 500-mesh sieve to produce carbon-coated silicon oxide compound powder; and the carbon content of the carbon-coated silicon oxide compound powder was tested to be 6wt%.

The performance parameters and the high-temperature storage performance of a cell using the anode active material are shown in Table 1.

### Embodiment 1-5

1000 g of silicon oxide compound particles with a median particle size of 7 µm were weighed and placed in a CVD furnace. With methane as a carbon source, a coating reaction was conducted at 800°C under the condition that the flow ratio of methane to argon was 1:1, resulting in silicon oxide compound particles coated with a carbon film layer. The carbon content of the carbon-coated silicon oxide compound powder was tested to be 5wt%.

The performance parameters and the high-temperature storage performance of a cell using the anode active material are shown in Table 1.

### Embodiment 1-6

1000 g of silicon oxide compound particles with a median particle size of 10 µm were weighed and placed in a CVD furnace. With methane as a carbon source, a coating reaction was conducted at 800°C under the condition that the flow ratio of methane to argon was 2:1, resulting in silicon oxide compound particles coated with a carbon film layer. The carbon content of the carbon-coated silicon oxide compound powder was tested to be 7wt%.

The performance parameters and the high-temperature storage performance of a cell using the anode active material are shown in Table 1.

### Embodiment 1-7

1000 g of silicon oxide compound particles with a median particle size of 6 µm were weighed and placed in a CVD furnace. With methane as a carbon source, a low-pressure coating reaction was conducted at 800°C under the condition that the flow ratio of methane to argon was 2:1. Although the production efficiency of low-pressure CVD reaction is low, it can greatly increase the uniformity of carbon film layers, thus obtaining a carbon film layer with higher smoothness and compactness and fewer defects. The carbon content of the carbon-coated silicon oxide compound powder was tested to be 7wt%.

The performance parameters and the high-temperature storage performance of a cell using the anode active material are shown in Table 1.

### Embodiment 1-8

1000 g of silicon oxide compound particles with a median particle size of 5 µm were weighed and placed in a CVD furnace. With methane as a carbon source, a coating reaction was conducted at 800°C under the condition that the flow ratio of methane to argon was 0.6:1, resulting in silicon oxide compound particles coated with a carbon film layer. The carbon content of the carbon-coated silicon oxide compound powder was tested to be 6wt%.

The performance parameters and the high-temperature storage performance of a cell using the anode active material are shown in Table 1.

### Embodiments 1-9 to 1-17

Similar to Embodiments 1-1 to 1-8, silicon oxide compound particles were used as raw materials and different carbon film coating processes were adopted, including adjusting the selection of carbon source, carbonization temperature, the amount of carbon source added, air pressure (vacuum degree), atmosphere ratio, air flow direction, heating speed, design of heating and preservation program, intensity of mechanical stirring, selection of equipment, etc., so as to obtain different carbon-coated silicon oxide compound powders of Embodiments 1-9 to 1-17.

The performance parameters and the high-temperature storage performance of a cell using the anode active material are shown in Table 1.

### Comparative example 1-1

1000 g of silicon oxide compound particles and sucrose were evenly dry-mixed in a coating vessel, then heated to 200°C and maintained at a constant temperature while stirring for 3 hours, and then heated to 500°C for 5 hours for carbonization; a resulting material obtained after cooling was sieved through a 500-mesh sieve to produce carbon-coated silicon oxide compound powder; and the carbon content of the carbon-coated silicon oxide compound powder was tested to be 10wt%.

The performance parameters and the high-temperature storage performance of a cell using the anode active material are shown in Table 1.

### Comparative example 1-2

1000 g of silicon oxide compound particles and sucrose were evenly dry-mixed in a coating vessel, then heated to 180°C and maintained at a constant temperature while stirring for 3 hours, and then heated to 400°C for 8 hours for carbonization; a resulting material obtained after cooling was sieved through a 500-mesh sieve to produce carbon-coated silicon oxide compound powder; and the carbon content of the carbon-coated silicon oxide compound powder was tested to be 8wt%.

The performance parameters and the high-temperature storage performance of a cell using the anode active material are shown in Table 1.

**Table 1**

| | S(m²/g) | A | Calculated particle size D_{c} (µm) | Median particle size D₅₀ (µm) | D₅₀/D_{c} | Thermal expansion under high-temperature storage (%) | Capacity retention rate (%) | Capacity recovery rate (%) | Gas production state of cell |
|---|---|---|---|---|---|---|---|---|---|
| Embodiment 1-1 | 15 | 1.52 | 0.71 | 10.64 | 15.00 | 22.7 | 78.6 | 86.3 | Gas bubbles |
| Embodiment 1-2 | 12.104 | 1.33 | 0.77 | 9.12 | 11.86 | 16.9 | 81.6 | 88.8 | Few gas bubbles |
| Embodiment 1-3 | 14.231 | 2.00 | 0.98 | 12.85 | 13.06 | 19.1 | 79.2 | 88.0 | Gas bubbles |
| Embodiment 1-4 | 10 | 1.33 | 0.93 | 8.61 | 9.25 | 14.1 | 82.1 | 90.2 | No |
| Embodiment 1-5 | 7.914 | 1.41 | 1.25 | 7.96 | 6.38 | 11.3 | 83.6 | 92.0 | No |
| Embodiment 1-6 | 8.892 | 1.67 | 1.31 | 10.78 | 8.20 | 13.4 | 82.9 | 90.8 | No |
| Embodiment 1-7 | 6.765 | 1.20 | 1.24 | 6.89 | 5.55 | 10.2 | 84.0 | 92.9 | No |
| Embodiment 1-8 | 7.315 | 1.24 | 1.18 | 5.54 | 4.68 | 9.8 | 84.4 | 93.5 | No |
| Embodiment 1-9 | 5.541 | 1.31 | 1.65 | 6.42 | 3.89 | 8.6 | 84.7 | 93.9 | No |
| Embodiment 1-10 | 3.820 | 1.05 | 1.92 | 5.83 | 3.03 | 8.0 | 85.1 | 94.5 | No |
| Embodiment 1-11 | 2.636 | 0.91 | 2.42 | 5.30 | 2.19 | 7.1 | 85.9 | 95.7 | No |
| Embodiment 1-12 | 3.467 | 1.18 | 2.38 | 5.95 | 2.50 | 7.5 | 85.6 | 95.1 | No |
| Embodiment 1-13 | 1.199 | 0.88 | 5.15 | 10.34 | 2.01 | 6.8 | 86.2 | 95.9 | No |
| Embodiment 1-14 | 1.518 | 0.92 | 4.23 | 6.97 | 1.65 | 6.2 | 86.7 | 96.7 | No |
| Embodiment 1-15 | 1.458 | 0.93 | 4.48 | 6.44 | 1.44 | 6.0 | 87.4 | 96.8 | No |
| Embodiment 1-16 | 1.022 | 1.01 | 6.90 | 8.07 | 1.17 | 5.3 | 88.6 | 97.1 | No |
| Embodiment 1-17 | 0.877 | 1.05 | 8.40 | 7.34 | 0.87 | 5.1 | 88.8 | 97.2 | No |
| Comparative example 1-1 | 19.89 | 1.52 | 0.53 | 10.53 | 19.68 | 31.2 | 73.7 | 80.2 | Gas production |
| Comparative example 1-2 | 19.28 | 1.01 | 0.37 | 10.19 | 27.79 | 38.4 | 70.4 | 78.3 | Gas production |

As can be seen from Table 1, the smaller the ratio D₅₀/D_{c} of the median particle size D₅₀ to the calculated particle size D_{c} of the anode active material, the better the high-temperature stability of the anode active material, the smaller the expansion, and the less likely it is to generate gas.

Further, as can be seen from Table 1, significant structural differences were observed in the carbon film layers obtained under different process parameters (such as carbon source type, coating temperature, atmosphere, air pressure, heating rate, carbon content, heating and preservation program, and mechanical stirring) and different furnace structure designs. The degree of defects in the carbon film layers also varied significantly.

### Embodiment 2-1

The anode active materials of Embodiments 1-16 were used as raw materials, and the powder, lithium metal foil, and biphenyl were added to a sealable glass container, followed by the addition of methyl butyl ether and stirring reaction in an argon atmosphere. After completion of the reaction and subsequent drying, the obtained powder was subjected to heat treatment in an argon atmosphere, with a heating rate of 2°C per minute, up to 680°C. The powder was then kept at this temperature for 10 hours before undergoing natural cooling, resulting in lithium-doped silicon oxide compound powder.

The performance parameters and the high-temperature storage performance of a cell using the anode active material are shown in Table 2.

### Embodiment 2-2

The products of Embodiments 1-16 were used as raw materials. The process was similar to that in Embodiment 2-1, except that the heat treatment process after lithium doping was changed to: heating to 720°C at a heating rate of 5°C per minute, then maintaining the temperature for 3 hours, and then naturally cooling to obtain lithium-doped silicon oxide compound powder.

The performance parameters and the high-temperature storage performance of a cell using the anode active material are shown in Table 2.

### Embodiment 2-3

The products of Embodiments 1-16 were used as raw materials. The process was similar to that in Embodiment 2-1, except that the heat treatment process after lithium doping was changed to: heating to 720°C at a heating rate of 10°C per minute, then maintaining the temperature for 6 hours, and then naturally cooling to obtain lithium-doped silicon oxide compound powder.

The performance parameters and the high-temperature storage performance of a cell using the anode active material are shown in Table 2.

### Embodiment 2-4

The products of Embodiments 1-16 were used as raw materials. The process was similar to that in Embodiment 2-1, except that the heat treatment process after lithium doping was changed to: heating to 850°C at a heating rate of 10°C per minute, then maintaining the temperature for 2 hours, and then naturally cooling to obtain lithium-doped silicon oxide compound powder.

The performance parameters and the high-temperature storage performance of a cell using the anode active material are shown in Table 2.

### Embodiment 2-5

The products of Embodiments 1-10 were used as raw materials. The aforementioned particles were mixed with a lithium-containing compound (e.g., lithium oxide, lithium hydride, lithium hydroxide, lithium carbonate, etc.), and the mixture was subjected to heat treatment in an argon atmosphere, with a heating rate of 2°C per minute, up to 400°C which was maintained for 3 hours, and then to 650°C which was maintained for 10 hours. Lithium-containing silicon oxide compounds coated with a carbon film were obtained after natural cooling.

The performance parameters and the high-temperature storage performance of a cell using the anode active material are shown in Table 2.

### Embodiment 2-6

The products of Embodiments 1-10 were used as raw materials. The process was similar to that in Embodiments 2-5, except that the heat treatment process after lithium doping was changed to: directly heating to 700°C at a heating rate of 5°C per minute, then maintaining the temperature for 6 hours, and then naturally cooling to obtain lithium-doped silicon oxide compound powder.

The performance parameters and the high-temperature storage performance of a cell using the anode active material are shown in Table 2.

### Embodiment 2-7

The products of Embodiments 1-10 were used as raw materials. The process was similar to that in Embodiments 2-5, except that the heat treatment process after lithium doping was changed to: directly heating to 820°C at a heating rate of 10°C per minute, then maintaining the temperature for 2 hours, and then naturally cooling to obtain lithium-doped silicon oxide compound powder.

The performance parameters and the high-temperature storage performance of a cell using the anode active material are shown in Table 2.

**Table 2**

| Embodiment | Lithium doping | S(m²/g) | A | Calculated particle size D_{c} (µm) | Median particle size D₅₀ (µm) | D₅₀/D_{c} | Thermal expansion rate under high-temperature storage (%) | Capacity retention rate (%) | Capacity recovery rate (%) |
|---|---|---|---|---|---|---|---|---|---|
| 2-1 | Yes | 1.09 | 1.01 | 6.49 | 8.07 | 1.24 | 5.3 | 88.7 | 96.9 |
| 2-2 | Yes | 1.56 | 1.01 | 4.53 | 8.07 | 1.78 | 6.0 | 87.6 | 96.0 |
| 2-3 | Yes | 2.43 | 1.01 | 2.91 | 8.07 | 2.77 | 7.5 | 85.6 | 94.9 |
| 2-4 | Yes | 3.89 | 1.01 | 1.82 | 8.07 | 4.44 | 9.8 | 83.9 | 93.2 |
| 2-5 | Yes | 3.930 | 1.05 | 1.87 | 5.83 | 3.12 | 8.1 | 85.2 | 94.4 |
| 2-6 | Yes | 5.010 | 1.05 | 1.47 | 5.83 | 3.97 | 8.7 | 84.4 | 93.6 |
| 2-7 | Yes | 7.190 | 1.05 | 1.02 | 5.83 | 5.70 | 11.2 | 83.2 | 92.1 |

According to the data in Table 1 and Table 2, the process of lithium intercalation will have different levels of influence on the carbon film layer structure on the surfaces of the silicon oxide compound particles. If the diffusion process is mild and controllable, the impact on the carbon film layer structure on the surfaces of the particles is minimal; whereas if the diffusion process is relatively intense, it can trigger changes in the carbon film layer structure, resulting in a decrease in the interface stability of the material, causing a reduction in the high-temperature storage performance of the battery that uses the anode active material, and an increase in expansion.

Obviously, the above embodiments are only examples for clearly explaining the present application, and are not intended to limit the implementations. For those of ordinary skill in the art, other changes or modifications in different forms can be made on the basis of the above description. It is not necessary and impossible to exhaust all the implementations here. However, obvious changes or modifications derived therefrom are still within the scope of protection of the present application.

## Claims

1. An anode active material, comprising anode active substance particles, wherein the anode active substance particles comprise a silicon-based material core and a carbon film layer covering a surface of the silicon-based material core; the silicon-based material core contains a silicon oxide compound; and
a ratio of a median particle size D₅₀ to a calculated particle size D_{c} of the anode active material satisfies: D₅₀/D_{c}≤15, where the calculated particle size D_{c}=7×A/S, A represents a particle size distribution span value of the anode active material, and S represents a specific surface area of the anode active material.

2. The anode active material according to claim 1, wherein the ratio of the median particle size D₅₀ to the calculated particle size D_{c} of the anode active material satisfies: D₅₀/D_{c}≤10, preferably D₅₀/D_{c}≤5, and further preferably D₅₀/D_{c}≤2.5.

3. The anode active material according to claim 1, wherein
the specific surface area S of the anode active material is 0.1-15 m²/g, preferably 0.3-10 m²/g, and further preferably 0.3-6 m²/g.

4. The anode active material according to claim 1, wherein
the median particle size D₅₀ of the anode active material is 0.2-20 µm, preferably 1-15 µm, and further preferably 3-13 µm; and
the particle size distribution span value A of the anode active material is less than or equal to 2.0, preferably less than or equal to 1.5, and further preferably less than or equal to 1.2.

5. The anode active material according to claim 1, wherein the silicon-based material core further contains lithium.

6. The anode active material according to claim 5, wherein a content of lithium in the anode active substance particles is 0.1-20wt%, preferably 2-18wt%, and more preferably 4-15wt%.

7. The anode active material according to claim 1, wherein
a content of silicon in the anode active substance particles is 30-80wt%, preferably 35-65wt%, and more preferably 40-65wt%.

8. The anode active material according to claim 1, wherein the anode active substance particles further comprise nano-silicon grains, and a median particle size of the nano-silicon grains dispersed in the silicon-based material core is 0.1-35 nm, preferably 0.5-20 nm, and further preferably 1-15 nm.

9. The anode active material according to claim 1, wherein a thickness of the carbon film layer is 0.001-5 µm, preferably 0.005-2 µm, and more preferably 0.01-1 µm,

10. The anode active material according to claim 1, wherein a mass of the carbon film layer accounts for 0.01-20wt%, preferably 0.1-15wt%, and more preferably 1-12wt% of total mass of the anode active substance particles.

11. An electrode, comprising the anode active material according to any one of claims 1-10.

12. A battery, comprising the electrode according to claim 11.

13. A method of preparing the anode active material according to claim 1, comprising:
preparing silicon oxide compound particles; and
coating surfaces of the silicon oxide compound particles with a carbon film layer.

14. The method according to claim 13, further comprising:
performing lithium doping on the silicon oxide compound particles coated with the carbon film layer.
